Europäisches Patentamt

European Patent Office

Office européen des brevets

(11) Numéro de publication: **0 276 595**

**A1**

## (12) DEMANDE DE BREVET EUROPEEN

(21) Numéro de dépôt: 87402820.2

(22) Date de dépôt: 11.12.87

(51) Int. Cl.4: **H01G 1/005 , H01G 4/24**

(30) Priorité: 16.12.86 FR 8617573

(43) Date de publication de la demande:
03.08.88 Bulletin 88/31

(84) Etats contractants désignés:
DE GB IT NL

(71) Demandeur: **COMPAGNIE EUROPEENNE DE COMPOSANTS ELECTRONIQUES LCC**
**50, rue Jean-Pierre Timbaud**
**F-92400 Courbevoie(FR)**

(72) Inventeur: **Masson, Jean-Luc**
**THOMSON-CSF SCPI 19, avenue de Messine**
**F-75008 Paris(FR)**
Inventeur: **Pageaud, Michel**
**THOMSON-CSF SCPI 19, avenue de Messine**
**F-75008 Paris(FR)**
Inventeur: **Joder, Catherine**
**THOMSON-CSF SCPI 19, avenue de Messine**
**F-75008 Paris(FR)**

(74) Mandataire: **Guérin, Michel et al**
**THOMSON-CSF SCPI 19, avenue de Messine**
**F-75008 Paris(FR)**

(54) Condensateur feuilleté à coefficient de température défini et à bonne stabilité dans le temps.

(57) L'invention concerne un condensateur feuilleté du type à coefficient de température défini et à bonne stabilité dans le temps, constitué par un empilement d'éléments diélectrique (6) séparés par des armatures conductrices (1,2) reliées par des connexions électriques latérales, les paires entre elles et les impaires entre elles. Les armatures sont constituées d'un film plastique métallisé (3,4) sur ses deux faces, les deux faces métallisées se trouvant reliées électriquement entre elles lors de la réalisation des connexions électriques latérales.

FIG_1

EP 0 276 595 A1

# CONDENSATEUR FEUILLETE A COEFFICIENT DE TEMPERATURE DEFINI ET A BONNE STABILITE DANS LE TEMPS

La présente invention concerne un condensateur à diélectrique film plastique métallisé, à coefficient de température défini et à bonne stabilité dans le temps.

Un tel condensateur se définit par son coefficient de température, sa stabilité aux essais de variation rapide en température et sa stabilité aux essais climatiques en atmosphère humide. Ces trois paramètres sont fonction des diélectriques utilisés et de la technologie de fabrication.

On connaît la technologie des condensateurs bobinés à armatures en étain ou en aluminium et à diélectrique nu sous forme de film plastique. Selon cette technologie, un coefficient de température stable et une bonne stabilité aux essais climatiques ne peuvent être obtenus que par l'utilisation de diélectriques en polystyrène et en polypropylène associés à des armatures massives. Ces condensateurs ont pour inconvénients d'être d'un volume très important d'une part et d'autre part de ne pas pouvoir être réalisés par empilement.

On connaît également la technologie des condensateurs empilés utilisant pour diélectrique des films plastiques métallisés en polycarbonate ou en polysulfone. Ces deux diélectriques ont pour inconvénient de posséder un coefficient d'absorption d'eau très important. Ceci nécessite alors l'utilisation d'un matériau d'obturation de très bonne perméabilité à la vapeur d'eau afin d'obtenir une bonne stabilité climatique. Ces matériaux sont chers et difficiles à mettre en oeuvre.

Afin de pallier ces inconvénients,l'invention propose un condensateur utilisant pour armature un film en matière plastique filmable, métallisé sur ses deux faces qui seront reliées électriquement, le diélectrique assurant l'effet capacitif étant interposé entre deux armatures et étant choisi en fonction de son comportement en température, à l'humidité et au vieillissement.

L'invention a donc pour objet un condensateur feuilleté du type à coefficient de température défini et à bonne stabilité dans le temps, constitué par un empilement d'éléments diélectriques séparés par des connexions électriques armatures étant reliées par des armatures conductrices, lesdites latérales, les paires entre elles et les impaires entre elles, caractérisé en ce que les armatures sont constituées d'un film plastique métallisé sur ses deux faces, les deux faces métallisées se trouvant reliées électriquement entre elles lors de la réalisation des connexions électriques latérales.

L'invention sera mieux comprise et d'autres avantages apparaîtront au moyen de la description qui va suivre, donnée à titre non limitatif, et des figures annexées parmi lesquelles :

- la figure 1 est une vue en coupe d'une partie d'un condensateur feuilleté selon l'invention,

- la figure 2 est une vue en coupe d'une partie d'un condensateur feuilleté du type laque selon l'invention.

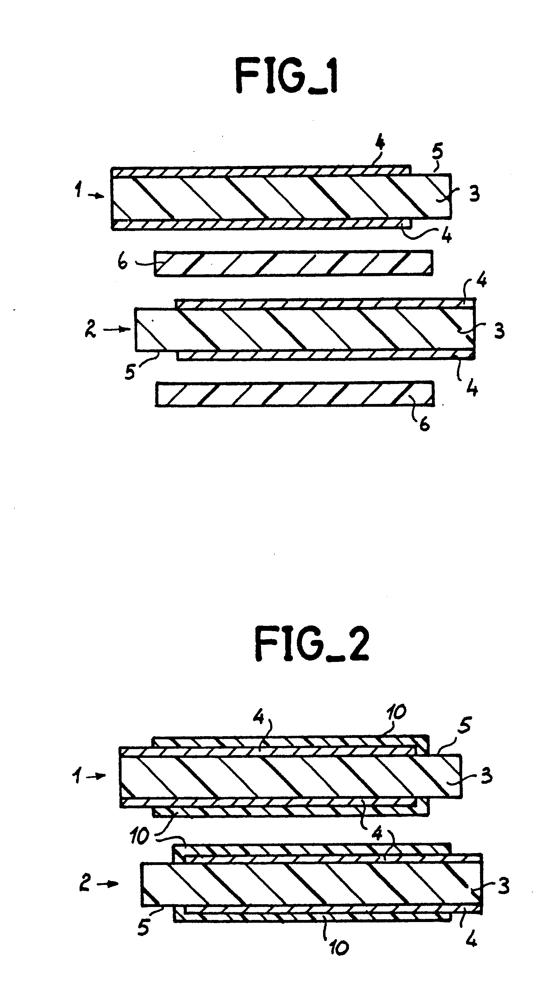

Les figures 1 et 2 sont des vues en coupe transversales d'empilements destinés à former des condensateurs. On n'a représenté que quelques couches mais elles suffisent à illustrer l'invention.

Selon la figure 1, les armatures 1 et 2 sont constituées d'un film plastique 3 dont les deux faces sont recouvertes de métallisations 4. Il est avantageux que les métallisations 4 ne recouvrent pas entièrement toutes les faces du film 3 pour laisser subsister des marges latérales 5. Pour un même film, les marges 5 sont situées d'un même côté. L'assemblage du condensateur est effectué de façon que les armatures impaires aient leurs marges situées d'un même côté de l'empilement et que les armatures paires aient leurs marges situées du côté opposé. Les films 3 peuvent être en polyester, en polycarbonate, en polysulfone, en polypropylène ou en toute autre matière plastique filmable et quie peut être métallisée. Les métallisations peuvent être réalisées en aluminium ou en étain selon les techniques connues de l'homme de l'art.

Entre chaque couple d'armatures 1 et 2 est intercalée une couche diélectrique 6 qui assurera l'effet capacitif. Cette couche diélectrique est constituée par un film en polystyrène ou en polyprolylène.

Le condensateur selon l'invention peut être obtenu par empilement selon la technique connue du bobinage sur une roue de grand diamètre. Il peut encore être obtenu par bobinage. Les faces latérales de l'empilement ou du bobinage sont métallisées selon la technique connue sous le nom de "schoopage". Le schoopage aura pour conséquence de relier électriquement toutes les armatures paires entre elles et toutes les armatures impaires entre elles et permettra notamment la liaison électrique entre les métallisations déposées sur les faces d'un même film 3. Ce film plastique métallisé sur ses deux faces n'a donc pas d'effet capacitif sur le condensateur. Il ne sert que d'armature. Ses caractéristiques diélectriques et son coefficient d'absorption d'eau n'ont donc aucune importance.

Comme le montre la figure 1, il est avantageux que certaines conditions géométriques soient observées. Un décalage des bords entre les armatures paires et impaires permet d'assurer de meilleures prises de contact pour le schoopage. Un retrait de la couche diélectrique 6 par rapport aux bords des armatures les plus proches évite que cette couche soit trop exposée à la chaleur dégagée lors du schoopage. Si la couche 6 déborde légèrement dans les marges 5, cela assure une meilleure isolation entre les métallisations adjacentes à cette couche.

A titre d'exemple, les dimensions des différents constituants du condensateur peuvent être les suivantes :

-4,5 mm de large pour le film 3 dont l'épaisseur est variable selon la matière utilisée (1,5 à 1,8 $\mu$ pour le polyester, 2 à 2,5 $\mu$ pour le polycarbonate, 4 $\mu$ pour le polyprolylène),

-200 angströms d'épaisseur pour les métallisations,

-4 mm de large pour la couche diélectrique 3 pour une épaisseur de 8 $\mu$ dans le cas du polystyrène et de 4 $\mu$ dans le cas du polypropylène,

-0,1 mm de décalage entre les bords des armatures pairs et impaires.

Ces dimensions correspondent à des films facilement disponibles chez les fournisseurs mais peuvent être modifiées selon les besoins.

Dans le cas d'une couche diélectrique 3 en polystyrène, on obtient un coefficient de température nominal de - 100 ppm/°C et une stabilité générale en dérive de capacité inférieure à 0,5 % sur une plage de température allant de - 55°C à + 85°C. Ceci permet d'utiliser de tels condensateurs dans des filtres de voix téléphoniques en association avec des selfs dont le coefficient de température est de + 100 ppm°'C.

Dans le cas d'une couche diélectrique 3 en polyprolylène, on obtient un coefficient de température nominal de - 300 ppm/°C et une stabilité générale en dérive de capacité inférieure à 0,5 % sur une plage de température allant de - 55°C à + 100°C. Ce diélectrique a l'avantage de donner une excellente stabilité en fonction du temps et de l'humidité.

Une variante du condensateur selon l'invention consiste à remplacer la couche diélectrique référencée 6 sur la figure 1 par une couche de laque déposée sur les métallisations des armatures. La figure 2 représente une telle solution.

Sur la figure 2, les armatures 1 et 2 sont formées comme précédemment d'un film plastique 3 métallisé sur ses deux faces par des dépôts 4 sauf sur les marges latérales 5. La différence essentielle réside dans le fait que chaque couche diélectrique est constituée par des dépôts de laque 10 effectués sur la plus grande partie de la surface des métallisations 4. Pour assurer une meilleure isolation électrique entre les métallisations encadrant une même couche diélectrique, il est préférable que la laque déborde de la métallisation du côté des marges latérales comme cela est représenté à la figure 2.

La laque peut être déposée par des méthodes connues de l'homme de l'art et avoir 0,5 à 0,6 $\mu$ d'épaisseur.

Plusieurs types de laque peuvent être utilisés, par exemple des dérivés du styrène tel que l'acétoxystyrène polyallylbenzène. Dans ce dernier cas, on peut obtenir un coefficient de température nominal de - 100 ppm/°C et une stabilité générale en dérive de capacité inférieure à 0,5 % sur une plage de température allant de - 55°C à + 85°C.

L'utilisation de ces différents diélectriques permet d'obtenir un coefficient de température défini tout en conservant une excellente stabilité aux essais de séquence climatique, de chaleur humide et de vieillissement accéléré.

L'invention procure les avantages suivants.

Elle permet la miniaturisation du composant. D'abord grâce à la méthode d'empilement inapplicable dans le cas de condensateurs à armatures massives. Ensuite, grâce au fait que l'épaisseur d'un film polyester (lorsque ce matériau est utilisé) disponible chez les fabricants est de 1,8 $\mu$ (voire 1,5 $\mu$) alors que les armatures massives en étain ou en aluminium ont 5 $\mu$ d'épaisseur. Ceci procure un gain volumique d'environ 36 % sur les armatures. Enfin, si on utilise un diélectrique laqué au lieu d'un diélectrique film, le gain volumique pour cette partie est de 27 %.

L'utilisation d'armatures en film plastique métallisés sous vide permet le phénomène d'autocicatrisation à l'encontre de l'utilisation d'armatures massives en étain ou en aluminium.

En choisissant judicieusement le film plastique servant d'armature en fonction de ses propriétés thermo-mécaniques, on peut jouer sur les contraintes qu'il engendre sur le diélectrique lui-même. L'épaisseur de l'armature intervient également dans l'action mécanique exercée sur le diélectrique actif.

## Revendications

1. Condensateur feuilleté du type à coefficient de température défini et à bonne stabilité dans le temps, constitué par un empilement d'éléments diélectriques séparés par des armatures conductrices (1,2) lesdites armatures étant reliées par des connexions électriques latérales, les paires entre elles et les impaires entre elles, caractérisé en ce que les armatures sont constituées d'un film plastique métallisé (3,4) sur ses deux faces, les deux faces métallisées se trouvant reliées électriquement entre elles lors de la réalisation des connexions électriques latérales.

2. Condensateur selon la revendication 1, caractérisé en ce que les connexions électriques latérales sont des métallisations déposées par - schoopage.

3. Condensateur selon l'une des revendications 1 ou 2, caractérisé en ce que le film plastique (3) des armatures (1,2) est du polyester, du polycarbonate, du polysulfone ou du polypropylène.

4. Condensateur selon l'une quelconque des revendications 1 à 3, caractérisé en ce que les métallisations (4) des armatures (1,2) sont des dépôts d'aluminium ou d'étain.

5. Condensataur selon l'une quelconque des revendications 1 à 4, caractérisé en ce que lesdites métallisations (4) laissent subsister des marges latérales (5) sur les armatures (1,2) du côté opposé à la laison électrique avec les connextions latérales correspondantes.

6. Condensateur selon la revendication 5, caractérisé en ce que lesdits éléments diélectriques dépassent du bord des métallisations (4) délimitant les marges (5).

7. Condensateur selon l'une quelconque des revendications 1 à 6, caractérisé en ce que lesdits éléments diélectriques sont formés de couches (6), une couche étant comprise entre deux armatures (1,2).

8. Condensateur selon la revendication 7, caractérisé en ce que lesdites couches (6) sont en polystyrène ou en polypropylène.

9. Condensateur selon l'une quelconque des revendications 1 à 6, caractérisé en ce que lesdits éléments diélectriques sont formés de couches de laque (10) déposées sur les métallisations (4) des armatures (1,2).

10. Condensateur selon la revendication 9, caractérisé en ce que la laque utilisée est un dérivé du styrène.

11. Condensateur selon la revendication 10, caractérisé en ce que la laque utilisée est de l'acétoxystyrène polyallylbenzène.

# FIG_1

# FIG_2

Office européen
des brevets

# RAPPORT DE RECHERCHE EUROPEENNE

Numero de la demande

EP 87 40 2820

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 156 525 (W. WESTERMANN) * Page 2, ligne 31 - page 3, ligne 37; figure * | 1-3,5,6 | H 01 G 1/005 H 01 G 4/24 |
| A | --- | 8 | |
| X | US-A-3 740 623 (TRW INC.) * Colonne 1, ligne 54 - colonne 3, ligne 16; colonne 3, ligne 59 - colonne 5, ligne 16 * | 1-6 | |
| A | --- | 8 | |
| A | DE-A-1 158 178 (SIEMENS & HALSKE AG) * Colonne 3, ligne 39 - colonne 4, ligne 15; figure 2 * | 7-10 | |
| A | --- FR-A-2 535 516 (L.C.C.-C.I.C.E.) ----- | | |

DOMAINES TECHNIQUES RECHERCHES (Int. Cl.4)

H 01 G

Le présent rapport a été établi pour toutes les revendications

| Lieu de la recherche | Date d'achèvement de la recherche | Examinateur |
|---|---|---|
| LA HAYE | 17-03-1988 | SCHUERMANS N.F.G. |

EPO FORM 1503 03.82 (P0402)